Europäisches Patentamt

European Patent Office

Office européen des brevets

(11) Numéro de publication: **0 129 184 B1**

(12) **FASCICULE DE BREVET EUROPEEN**

(45) Date de publication de fascicule du brevet: **14.10.92**

(51) Int. Cl.5: **G02B 6/24**, G02B 6/36, G02B 6/44

(21) Numéro de dépôt: **84106663.2**

(22) Date de dépôt: **12.06.84**

(54) **Jonction multiple pour câbles sous-marins à fibres optiques.**

(30) Priorité: **15.06.83 FR 8309865**

(43) Date de publication de la demande:
**27.12.84 Bulletin 84/52**

(45) Mention de la délivrance du brevet:
**14.10.92 Bulletin 92/42**

(84) Etats contractants désignés:
**DE FR GB IT**

(56) Documents cités:
**DE-A- 3 118 173**
**US-A- 4 348 076**

**PATENT ABSTRACTS OF JAPAN, vol. 6, no. 229 (P-155)[1107], 16 novembre 1982; & JP - A - 57 130 008**

**PATENT ABSTRACTS OF JAPAN, vol. 6, no. 30 (P-103)[908], 23 février 1982; & JP - A - 56 149 011**

**PATENT ABSTRACTS OF JAPAN, vol. 6, no. 92 (P-119)[970], 29 mai 1982; & JP - A - 57 26814**

(73) Titulaire: **ALCATEL CABLE**
**30, rue des Chasses**
**F-92111 Clichy Cédex(FR)**

(72) Inventeur: **Dubar, Thierry**
**6, rue Edouard Manet Bâtiment 1 - Appt. 87**
**F-62100 Calais(FR)**

(74) Mandataire: **Weinmiller, Jürgen et al**
**Lennéstrasse 9 Postfach 24**
**W-8133 Feldafing(DE)**

## Description

La présente invention concerne une jonction multiple pour câbles sous-marins à fibres optiques, destinée à assurer le raccordement entre une première tête de câble et une seconde tête à au moins deux câbles.

Autrement dit, elle se rapporte à un dispositif permettant de répartir les fibres optiques d'un câble sous-marin venant d'un premier point dans deux câbles allant vers deux autres points avec éventuellement une liaison supplémentaire entre lesdits autres points.

La présente invention a pour but de proposer une jonction étanche à l'eau sous une pression de l'ordre de 700 bars, assurant la continuité mécanique et les continuités ou les isolements électriques nécessaires.

La présente invention a pour objet une jonction multiple pour câbles sous-marins à fibres optiques assurant le raccordement des fibres d'un premier desdits câbles à des fibres d'au moins deux deuxièmes desdits câbles, comportant une première tête de premier câble et une seconde tête de deuxièmes câbles, chacun desdits câbles comprenant un coeur optique contenant des fibres optiques, une voûte en fils d'acier, un tube de cuivre rétreint sur la voûte et une gaine externe isolante, ladite première tête comportant, d'une part, à la suite l'un de l'autre, une première pièce de raccordement traversée par ledit premier câble, qui y est fixé, et équipée d'une première pièce étanche de sortie des fibres dudit premier câble, et un premier magasin de stockage d'un excès de longueur de fibres, et, d'autre part, une première pièce de renforcement, entourant ladite première pièce de raccordement et ledit premier magasin, ladite jonction étant caractérisée en ce que :

- ladite seconde tête comporte d'une part, à la suite les uns des autres, une deuxième pièce de raccordement unique, munie d'alésages individuels sensiblement parallèles pour chacun desdits deuxièmes câbles qui y sont fixés, et équipée d'une pièce étanche de sortie pour les fibres desdits deuxièmes câbles, et au moins un deuxième magasin de stockage d'un excès de longueur de fibres, et d'autre part une seconde pièce de renforcement, entourant ladite deuxième pièce de raccordement et chaque deuxième magasin, et en ce qu'elle comporte, en outre :
- un boîtier de liaison reliant mécaniquement lesdites première et deuxième pièces de renforcement,
- un câble d'accès, logé dans ledit boîtier et relié audit premier magasin de stockage et au deuxième magasin de stockage ou l'un des deuxièmes magasins dit deuxième magasin terminal, recevant les fibres issues des magasins auxquels il est relié, les fibres du premier câble étant soudées à celles des deuxièmes câbles reçues dans ledit câble d'accès,
- un revêtement isolant étanche à l'eau sur ledit câble d'accès, ladite première tête et ladite seconde tête.

Selon un mode de réalisation, ledit boîtier de liaison est en résine renforcée de fibres de verre et il présente des ouvertures pour l'introduction de l'eau de mer.

Ledit câble d'accès est à tube métallique et comporte avantageusement, à l'intérieur du boîtier de liaison, une prise de mer constituée par une partie métallique soudée audit tube métallique, qui met ladite première tête au potentiel de la mer ; ledit tube métallique est isolé électriquement de ladite seconde tête de manière à assurer l'isolement électrique entre les deux têtes.

Selon un mode de réalisation particulièrement avantageux, certaines des fibres des deuxièmes câbles de ladite seconde tête sont soudées entre elles après leur passage à travers ladite deuxième pièce étanche et ladite seconde tête est à deux deuxièmes magasins de stockage dont l'un intérieur relativement à l'autre est affecté au stockage des fibres soudées entre elles desdits deuxièmes câbles.

A l'entrée de ladite seconde tête, lesdits deuxièmes câbles sont entourés par une pièce de protection présentant une cavité interne conique et solidarisée à ladite deuxième pièce de renforcement.

L'invention sera décrite ci-après plus en détail à l'aide d'un mode de réalisation et du dessin annexé dans lequel :
- la figure 1 est une vue très schématique en élévation d'une jonction multiple selon l'invention,
- la figure 2 est une coupe longitudinale de la jonction de la figure 1 en échelle agrandie, cette figure comportant trois parties 2A, 2B, 2C relatives respectivement aux éléments A, B, C de la jonction de la figure 1.

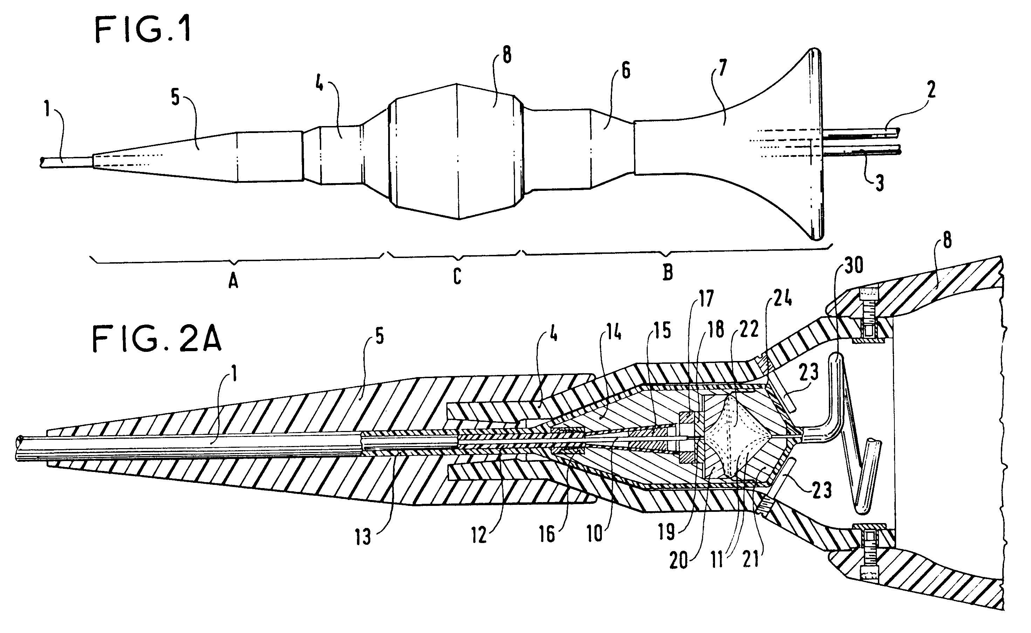

La figure 1 montre extérieurement une jonction entre d'une part un premier câble 1 à fibres optiques et d'autre part un second câble 2 et un troisième câble 3 à fibres optiques.

La partie A correspond à la tête du premier câble munie de sa pièce de renforcement 4 suivie d'une pièce conique terminale 5 de protection du câble 1.

La partie B correspond à la tête double portant les extrémités des câbles 2 et 3, munie de sa pièce de renforcement 6 et d'une pièce conique 7 de protection des câbles 2 et 3.

La partie C correspond au boîtier de liaison 8 entre les deux têtes.

Les fibres du câble 1 sont reliées à des fibres du câble 2 et à des fibres du câble 3, mais les câbles 2 et 3 peuvent avoir des fibres supplémentaires soudées entre elles. Ainsi il est possible d'établir des liaisons entre les câbles 1 et 2, entre les câbles 1 et 3 et entre les câbles 2 et 3.

On analyse tout d'abord la figure 2A.

Le câble 1 comporte, de manière connue en soi, un coeur optique 10 contenant des fibres optiques ; ce coeur optique est constitué d'un jonc en matière plastique renforcé par un câble d'acier, présentant des rainures périphériques hélicoïdales remplies d'un produit visqueux et où sont logées des fibres 11.

Cet ensemble est entouré d'un ou plusieurs rubans plastiques puis d'une gaine en polychlorure de vinyle, par exemple.

Une voûte 12 en fils d'acier, formant une armure pour le coeur optique, est elle-même gainée de cuivre puis d'un revêtement isolant 13. Au niveau de l'extrémité du câble 1, le coeur optique est libéré des fils de la voûte 12, qui sont coupés et viennent se loger dans un alésage conique prévu dans une pièce de raccordement 14 ; ils s'y trouvent coincés par une bague conique 15, et l'ensemble est enrobé de résine, par exemple époxy, pour assurer la résistance à la traction.

Un dispositif supplémentaire 16 de blocage des fils de la voûte 12 dans la pièce 14 est disposé dans la zone où ces fils sont désolidarisés du coeur optique, ce qui permet d'éviter leur décablage en amont de l'alésage conique.

Une pièce 18 munie de joints d'étanchéité et associée à une bague 17 ferme de manière étanche l'alésage conique et ne laisse des passages étanches que pour les fibres de verre 11 ; ces passages sont de préférence individuels, mais, pour la clarté du dessin, on n'a représenté qu'un seul passage 19. Les fibres aboutissent dans un magasin de stockage 22 formé de deux pièces coniques 20 et 21, dont l'une au moins, (ici la pièce 21) est vissée dans la partie extrême de la pièce de raccordement 14.

Les fibres 11 aboutissent à la sortie du magasin de stockage 22 à l'intérieur d'un câble d'accès 30 qui sera décrit plus loin.

Tout l'ensemble qui vient d'être décrit est protégé par un revêtement plastique surmoulé 24, par exemple en polyéthylène, se raccordant au revêtement 13 du câble 1.

Une pièce de renforcement 4, par exemple en résine époxy renforcée de fibres de verre, protège la tête du câble 1 qui y est immobilisée par des pions 23. La pièce 4 contribue à assurer la résistance à la traction de l'ensemble de la jonction. La partie du câble 1 émergeant de la pièce 4 est elle-même protégée par une pièce conique 5, par exemple en caoutchouc.

Pour réaliser le montage du dispositif de la figure 2A, on peut opérer de la manière suivante :
- Les pièces 5, 4 et la pièce 14 munie de la pièce 16 sont enfilées sur une extrémité du câble 1.
- Les fils de la voûte 12 sont coupés et déroulés en aval de la pièce 16 ; la bague 15 est enfilée pour bloquer les fils de voûte dans l'alésage conique de la pièce 14.
- On met en place ensuite la rondelle 17, les pièces 18 et 20.
- On prévoit une certaine longueur de fibres 11 et on ferme le magasin 22 à l'aide de la pièce 21.
- On repousse les fibres dans le magasin 22 en les lovant.
- On réalise le surmoulage du revêtement 24 pour le raccorder au revêtement 13.
- On met en place la pièce 4 et les pions 23.
- On solidarise la pièce 5 à la pièce 4 par encliquetage.

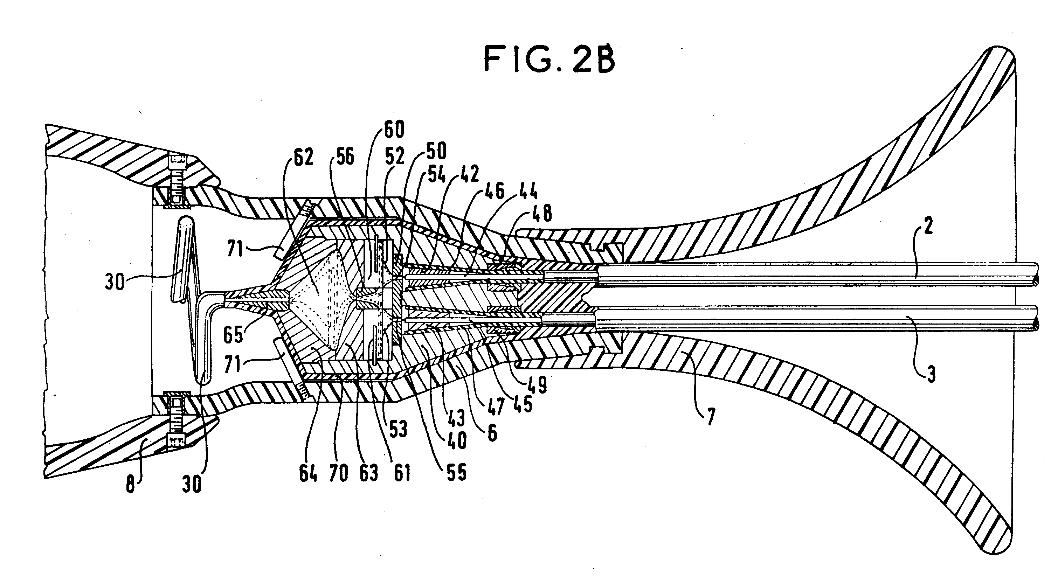

En se référant à la figure 2B, on voit une tête double supportant les extrémités des deux câbles 2 et 3.

Le câble 2 a un coeur optique 44 muni de fibres 52 et protégé par une voûte 46. De même, le câble 3 a un coeur optique 45 muni de fibres 53 et protégé par une voûte 47. Une pièce unique de raccordement 40 comporte deux alésages coniques parallèles entre eux pour recevoir les extrémités des fils des voûtes 46 et 47 bloquées respectivement par des bagues coniques 42 et 43. On complète le blocage par un enrobage de résine époxy.

On a référencé 48 et 49 les pièces de maintien des fils des voûtes 46 et 47 en amont des bagues 42 et 43.

Une pièce 50 ferme de manière étanche les deux alésages, mais laisse des passages individuels étanches 54 et 55 respectivement pour les fibres 52 et 53. Toutes ces fibres aboutissent dans un magasin de stockage 60. Parmi les fibres 52, celles qui sont soudées à des fibres 53 sont lovées après soudage contre des bâtonnets 61. Par contre, les fibres 52 et 53 qui sont destinées à être soudées aux fibres 11 traversent une pièce conique 56 jusqu'à un magasin de stockage 62 formé par deux pièces coniques 63 et 64 dont l'une (la pièce 64) est vissée dans l'extrémité de la pièce 40.

Les fibres du magasin 62 passent à travers une pièce isolante en céramique 65 et aboutissent au câble d'accès 30.

L'ensemble qui vient d'être décrit est protégé par un revêtement surmoulé 70 par exemple en polyéthylène, qui se raccorde aux revêtements isolants des câbles 2 et 3. La tête est protégée par une pièce 6 en résine époxy renforcée de fibres de verre ; elle est bloquée dans la pièce 6 par des pions 71 ; comme la pièce 4, la pièce 6 contribue à assurer la résistance à la traction de l'ensemble de la jonction.

Une pièce de protection 7 encliquetée dans la pièce 6 présente une cavité conique interne dont les parois limitent la courbure des câbles 2 et 3 à la sortie de la tête double.

Le montage de la tête double peut être effectué de la manière suivante :

- Les pièces 7, 6 et la pièce 40 munie de ses pièces 48 et 49 sont enfilées sur les extrémités respectives des câbles 2 et 3.
- Les fils des voûtes 46 et 47 sont coupés et déroulés en aval des pièces 48 et 49 ; les bagues coniques 42 et 43 sont enfilées pour bloquer les fils de voûte dans les alésages coniques de la pièce 14.
- On met en place la pièce 50. Les fibres 52 qui doivent être connectées à des fibres 53 sont soudées à ce niveau ; l'excédent de leur longueur est lové contre les bâtonnets 61. Les autres fibres 52 et 53 sont enfilées dans la pièce 56 par des passages individuels et y sont maintenues par un point de collage.
- On met en place la pièce 63, on prévoit une certaine longueur pour les fibres issues de la pièce 56, on ferme le magasin de stockage 62 en vissant la pièce 64 munie de sa pièce en céramique isolante 65, et on repousse les fibres dans le magasin 62.
- On réalise le surmoulage du revêtement 70 pour le raccorder aux revêtements isolants des câbles 2 et 3.
- On met en place la pièce 6 et on immobilise la tête double à l'aide des pions 71.
- On solidarise la pièce 7 à la pièce 6 par encliquetage.

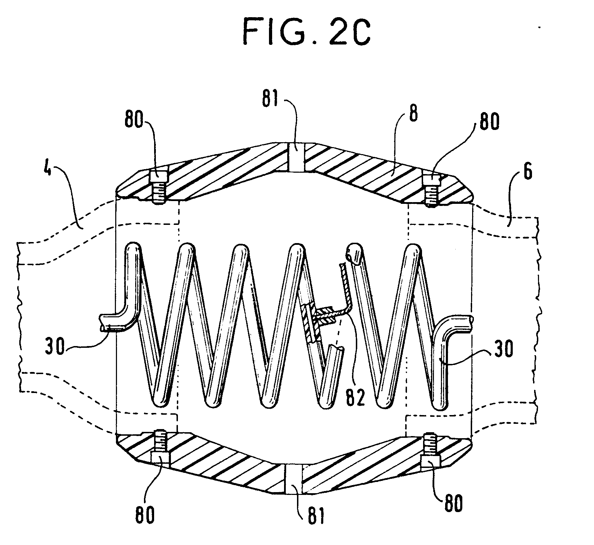

Comme on le voit dans la figure 2C, les pièces de protection 4 et 6 sont reliées par un boîtier de liaison 8 ; il s'agit d'une pièce en résine époxy renforcée de fibres de verre, assurant la continuité mécanique et solidarisée aux pièces 4 et 6 par des pions d'ancrage 80. Ce boîtier comporte des ouvertures 81 pour la pénétration de l'eau de mer. A l'intérieur de ce boîtier est logé le câble d'accès 30. Ce dernier comporte deux portions de tube métallique dans lesquelles s'étendent respectivement les extrémités des fibres 11 et des fibres 52 et 53. Lorsque la soudure entre ces fibres est réalisée et que les longueurs excédentaires ont été repoussées dans les magasins 22 et 62, on réunit les deux portions de tube du câble d'accès de manière connue en soi par un joint "bateau" ; on moule sur l'ensemble une gaine en matière thermoplastique aboutissant respectivement aux revêtements 24 et 70.

On a donc ainsi réalisé la continuité mécanique entre le câble 1 et les câbles 2 et 3, l'ensemble mécanique prévu autour de la jonction assurant la résistance à la traction.

En ce qui concerne la continuité électrique, on remarquera que le câble d'accès comporte une prise de mer 82 qui est une tige métallique soudée au tube métallique du câble d'accès et qui met au potentiel de la mer la tête supportant le câble 1. Du côté des câbles 2 et 3, le tube métallique du câble d'accès est isolé de la pièce métallique 64 par un joint en céramique 65. Il en résulte que la tête supportant le câble 1 est isolée électriquement de la tête supportant les câbles 2 et 3.

L'invention n'est pas limitée à ce mode de réalisation. On pourrait envisager une tête supportant les extrémités de trois câbles et plus.

Par ailleurs, le coeur optique des câbles 1, 2 et 3, peut être formé de fibres optiques contenues dans des tubes plastiques remplis de liquide visqueux.

**Revendications**

1. Jonction multiple pour câbles sous-marins à fibres optiques assurant le raccordement des fibres d'un premier desdits câbles à des fibres d'au moins deux deuxièmes desdits câbles, comportant une première tête de premier câble et une seconde tête de deuxièmes câbles, chacun desdits câbles (1, 2, 3) comprenant un coeur optique contenant des fibres optiques, une voûte en fils d'acier, un tube de cuivre rétreint sur la voûte et une gaine externe isolante, ladite première tête comportant, d'une part, à la suite l'un de l'autre, une première pièce de raccordement (14) traversée par ledit premier câble, qui y est fixé, et équipée d'une première pièce étanche de sortie des fibres dudit premier câble, et un premier magasin de stockage (22) d'un excès de longueur de fibres, et, d'autre part, une première pièce de renforcement (4), entourant ladite première pièce de raccordement et ledit premier magasin, ladite jonction étant caractérisée en ce que :

- ladite seconde tête comporte d'une part, à la suite les uns des autres, une deuxième pièce de raccordement unique (40), munie d'alésages individuels sensiblement parallèles pour chacun desdits deuxièmes câbles (2, 3) qui y sont fixés, et équipée d'une pièce étanche (50) de sortie pour les fibres desdits deuxièmes câbles, et au moins un deuxième magasin de stockage (60, 62) d'un excès de longueur de fibres, et d'autre part une seconde pièce de renforcement (6), entourant ladite deuxième pièce de raccordement et chaque deuxième magasin,

et en ce qu'elle comporte, en outre :

- un boîtier de liaison (8) reliant mécaniquement lesdites première et deuxième pièces de renforcement (4, 6),
- un câble d'accès (30), logé dans ledit boîtier et relié audit premier magasin de stockage (22) et au deuxième magasin de stockage (62) ou l'un des deuxièmes magasins, dit deuxième magasin terminal, recevant les fibres issues des magasins auxquels il est relié, les fibres du premier câble étant soudées à celles des deuxièmes câbles reçues dans ledit câble d'accès,
- un revêtement isolant étanche à l'eau sur ledit câble d'accès, ladite première tête et ladite seconde tête.

2. Jonction selon la revendication 1, caractérisée par le fait que ledit boîtier de liaison (8) est en résine renforcée de fibres de verre.

3. Jonction selon la revendication 2, caractérisée par le fait que ledit boîtier (8) présente des ouvertures (81) de pénétration de l'eau de mer.

4. Jonction selon la revendication 3, caractérisée par le fait que ledit câble d'accès est à tube métallique recouvert dudit revêtement isolant étanche et comporte, à l'intérieur du boîtier de liaison, une prise de mer (82) constituée par une partie métallique soudée audit tube métallique, qui met au potentiel de la mer au moins ladite première tête.

5. Jonction selon la revendication 4, caractérisée par le fait que ledit tube métallique du câble d'accès est isolé électriquement de ladite seconde tête, de manière que soit assuré l'isolement électrique entre les deux têtes.

6. Jonction selon l'une des revendication 1 à 5, caractérisée par le fait qu'elle comporte deux deuxièmes magasins de stockage (61, 62) dont l'un d'eux intérieur relativement à l'autre est affecté à une partie des fibres desdits deuxièmes câbles, qui sont soudées entre elles.

7. Jonction selon l'une des revendications 1 à 6, caractérisée par le fait qu'à l'entrée de ladite seconde tête, lesdits deuxièmes câbles sont entourés par une pièce de protection (7) présentant une cavité interne conique et solidarisée à ladite deuxième pièce de renforcement (6).

**Claims**

1. A multiple joint for submarine optical fiber cables designed to interconnect fibers of a first fiber cable with fibers of at least two second cables, comprising a first termination of the first cable and a second termination of the second cables, each of said cables (1, 2, 3) including an optical core containing optical fibers, a layer of steel wires, a copper tube swaged onto said layer and an insulative outer sheath, said first termination comprising, on the one hand, in succession to one another, a first connecting member (14) traversed by said first cable, which is fastened thereto, and fitted with a first tight outlet member for the fibers of said first cable, and a first storage chamber (22) for an excess length of fibers, and, on the other hand, a first reinforcing member (4), surrounding said first connecting member and said chamber, characterized in that

- said second termination comprises, on the one hand, in succession to one another, a second common connecting member (40), fitted with individual bores running substantially parallel for each of said second cables (2, 3), which are fastened thereto, and fitted with a tight outlet member (50) for the fibers of said second cables, and at least a second storage chamber (60, 62) for an excess length of fibers, and on the other hand, a second reinforcing member (6) surrounding said second connecting member and each second chamber, and in that it further includes
- a coupling box (8) mechanically linking together said first and second reinforcing members (4, 6),
- an access cable (30) accommodated in said box and connected to said first storage chamber (22) and to said second storage chamber (62) or to one of said chambers referred to as terminal second chamber, receiving the fibers issuing from the chambers to which said cable is connected, with the fibers of the first cable being welded to those of the second cables received in said access cable, and
- a watertight insulating coating on said access cable, said first termination and said second termination.

2. A joint according to claim 1, characterized in that said coupling box (8) is made of glassfiber-reinforced resin.

3. A joint according to claim 2, characterized in that said coupling box (8) has seawater inlet holes (81).

4. A joint according to claim 3, characterized in that said access cable is a metal tube, covered by said tight insulating coating and comprising, inside the coupling box, a seawater pole (82) constituted by a metallic piece welded to said metal tube, which brings the potential of the sea to at least said first termination.

5. A joint according to claim 4, characterized in that said metal tube is electrically insulated from said second termination, so as to ensure the electric insulation of the terminals from each other.

6. A joint according to any one of claims 1 to 5, characterized in that it includes two second storage chambers (61, 62), one of which, placed at the inner side relative to the other, being allocated to part of the fibers of said second cables, which are welded together.

7. A joint according to any one of claims 1 to 6, characterized in that at the inlet of said second termination, said second cables are surrounded by a protection member (7) which has an inner conical cavity (7) and is fastened to said second reinforcement member (6).

**Patentansprüche**

1. Mehrfachverbindung für Seekabel mit Lichtleitfasern, zum Anschluß der Fasern eines ersten Faserkabels an Fasern von mindestens zwei zweiten Kabeln, mit einem ersten Kopf des ersten Kabels und einem zweiten Kopf der zweiten Kabel, wobei jedes der Kabel (1, 2, 3) einen optischen Kern mit Lichtleitfasern, eine Bewehrung aus Stahldrähten, ein auf die Bewehrung aufgeschrumpftes Kupferrohr und eine äußere Isolierhülle aufweist und wobei der erste Kopf zum einen ein erstes Anschlußstück (14), das vom daran befestigten Kabel durchdrungen wird und mit einem ersten dichten Austrittsstück für die Fasern des ersten Kabels versehen ist, sowie ein sich anschließendes ersten Magazin (22) zur Speicherung einer Überschußlänge der Fasern und zum anderen ein erstes Verstärkungsstück (4) aufweist, welches das erste Anschlußstück und das erste Magazin umgibt, dadurch gekennzeichnet, daß
 - der zweite Kopf zum einen ein zweites gemeinsames Anschlußstück (40) mit individuellen, im wesentlichen parallelen Bohrungen für jedes der zweiten Kabel (2, 3), die daran befestigt sind, und mit einem dichten Austrittsstück (50) für die Fasern der zweiten Kabel versehen ist, sowie mindestens ein sich anschließendes zweites Magazin (60, 62) zur Speicherung einer Überschußlänge an Fasern, und zum anderen ein zweites Verstärkungsstück (6) aufweist, welches das zweite Anschlußstück und das zweite Magazin umgibt, und daß die Verbindung weiter aufweist:
 - ein Verbindungsgehäuse (8), das das erste und das zweite Verstärkungsstück (4, 6) mechanisch miteinander verbindet,
 - ein Zugangskabel (30), das im Gehäuse untergebracht und mit dem ersten Speichermagazin (22) sowie dem zweiten Speichermagazin (62) bzw. einem der zweiten Magazine, zweites Endmagazin genannt, verbunden ist und die aus den Magazinen austretenden Fasern, mit denen der Anschluß verbunden ist, aufnimmt, wobei die Fasern des ersten Kabels an diejenigen der zweiten Kabel angeschweißt sind, die vom Zugangskabel aufgenommen werden,
 - einen wasserdichten Isolierüberzug für das Zugangskabel, den ersten und den zweiten Kopf.

2. Verbindung nach Anspruch 1, dadurch gekennzeichnet, daß das Verbindungsgehäuse (8) aus glasfaserverstärktem Harz besteht.

3. Verbindung nach Anspruch 2, dadurch gekennzeichnet, daß das Verbindungsgehäuse (8) Öffnungen (81) zum Durchlaß von Meerwasser aufweist.

4. Verbindung nach Anspruch 3, dadurch gekennzeichnet, daß das Zugangskabel ein Metallrohr ist, das mit dem wasserdichten Isolierüberzug versehen ist, und im Inneren des Anschlußgehäuses einen Meerespol (82) aufweist, der aus einem an das Metallrohr angeschweißten Metallteil besteht, das zumindest den ersten Kopf auf das Potential des Meeres bringt.

5. Verbindung nach Anspruch 4, dadurch gekennzeichnet, daß das Metallrohr des Zugangskabels elektrisch gegen den zweiten Kopf isoliert ist, derart, daß die elektrische Isolierung zwischen den beiden Köpfen gewährleistet ist.

6. Verbindung nach einem der Ansprüche 1 bis 5, dadurch gekennzeichnet, daß sie zwei zweite Speichermagazine (61, 62) aufweist, von denen eines, das relativ zum anderen innen liegt, einem Teil der Fasern der zweiten Kabel zugewiesen ist, die miteinander verschweißt sind.

7. Verbindung nach einem der Ansprüche 1 bis 6, dadurch gekennzeichnet, daß am Eingang des zweiten Kopfes die zweiten Kabel von einem Schutzbauteil (7) umgeben sind, das einen konischen Innenraum besitzt und am zweiten Verstärkungsstück (6) befestigt ist.

FIG.1

FIG.2A

# FIG. 2B

EP 0 129 184 B1

# FIG. 2C